# EUROPEAN PATENT APPLICATION

(11) **EP 1 961 773 A2**
(43) Date of publication of application: **27.08.2008**
(21) Application number: 08003103.2
(22) Date of filing: 20.02.2008
(51) Int. Cl.: C08F 2/50

(54) **Photopolymerizable composition**

(30) Priority: 20.02.2007 JP 2007040026
(71) Applicant: FUJIFILM Corporation, Minato-ku Tokyo 106-8620 (JP)
(72) Inventor: Kawamura, Koichi, Ashigarakami-gun Kanagawa 258-8577 (JP)
(74) Representative: HOFFMANN EITLE

(57) **Abstract**

A photopolymerizable composition including a cationically polymerizable compound and a cation generating agent represented by formula (1):

Formula (1) D-L-A

wherein D represents a light absorption part that shows an absorption having an absorption coefficient of 1000 or more in a wavelength range of 300 nm or longer; A represents an active part which interacts with the light absorption part D to generate a cation when the light absorption part D is excited by light; and L represents a linking group which links the light absorption part D with the active part A.

## Description

### FIELD OF THE INVENTION

The present invention relates to a cationically polymerizable composition that shows high sensitivity to light. The present invention particularly relates to a photopolymerizable composition which can be suitably used in various fields, such as inks, color filters, holograms, proofs, sealants, adhesives, lithography, plastic relief-press plates, photoresists, and forming of three-dimensional articles. In particular, the present invention relates to a high sensitivity cationically polymerizable composition advantageously used in optical forming referred to as a three-dimensional forming.

### BACKGROUND OF THE INVENTION

A method of optically forming three-dimensional articles (rapid-prototyping) is known, which method involves repeating a step of irradiating selectively a radiation-curable liquid material (liquid resin composition) to form a cured resin layer, thereby forming a three-dimensional article in which the cured resin layers are integrally laminated (e.g., JP-A-60-247515 ("JP-A" means unexamined published Japanese patent application), JP-A-62-35966, JP-A-62-101408, and JP-A-5-24119). A typical example of such optical three-dimensional shaping method is as follows:

First, a liquid surface of a radiation-curable liquid resin composition contained in a container is irradiated selectively with light such as ultraviolet laser, to form a cured resin layer having a predetermined pattern. Subsequently, a radiation-curable liquid resin composition is supplied to form another layer on the cured resin layer, and the liquid surface is irradiated selectively with light, thereby integrally forming a new cured resin layer on the previously formed cured resin layer in such a manner that the new cured resin layer is continuously formed on the previously formed cured resin layer. Then, the above-mentioned step is repeated by prescribed times while changing or not changing the pattern according to which light is irradiated, thereby forming a three-dimensional article formed of a plurality of cured resin layers integrally laminated.

Hithertofore, as a radiation-curable liquid resin composition for use in the optical three-dimensional forming method, the following resin compositions (A) to (C) has been introduced:
(A) resin compositions containing a radically polymerizable organic compound such as urethane(meth)acrylate, oligoester(meth)acrylate, epoxy(meth)acrylate, thiol and an ene compound, and photosensitive polyimide (e.g., JP-A-1-204915, JP-A-2-208305, and JP-A-3-160013);
(B) resin compositions containing a cationically polymerizable organic compound such as an epoxy compound, a cyclic ether compound, a cyclic lactone compound, a cyclic acetal compound, a cyclic thioether compound, a spiro orthoester compound, and a vinyl ether compound (e.g., JP-A-1-213304); and
(C) resin compositions containing a radically polymerizable organic compound and a cationically polymerizable organic compound (e.g., JP-A-2-28261, JP-A-2-75618, JP-A-6-228413, JP-A-11-310626, JP-A-11-228610, and JP-A-11-240939).

Among the above-mentioned compositions (A) to (C), cationically polymerizable compositions containing the cationically polymerizable compound (B) are particularly advantageous in providing an article free from volume shrinkage and strain.

According to the optical three-dimensional forming method, even if an intended three-dimensional article has a complicated shape, such a three-dimensional article can be readily obtained in a short time. This technology is extremely useful in a trial production process in a new product development in automobile industry or household appliance industry, and is becoming indispensable for reducing the development period and cost. The three-dimensional articles obtained by such optical three-dimensional forming method are frequently used as a model for examining a design.

However, in the market trend in recent years, transparent articles such as optical components are highly demanded, and, in particular, three-dimensional articles that are free from coloring as much as possible have been demanded. Moreover, compositions having sensitivity as high as possible have been demanded from the viewpoint of reducing the production time.

### SUMMARY OF THE INVENTION

The present invention resides in a photopolymerizable composition including a cationically polymerizable compound and a cation generating agent represented by formula (1):

Formula (1) D-L-A

wherein D represents a light absorption part that shows an absorption having an absorption coefficient of 1000 or more in a wavelength range of 300 nm or longer; A represents an active part which interacts with the light absorption part D to generate a cation when the light absorption part D is excited by light; and L represents a linking group which links the light absorption part D with the active part A.

Other and further features and advantages of the invention will appear more fully from the following description.

### DETAILED DESCRIPTION OF THE INVENTION

The inventors of the present invention have carried out extensive researches, and have found that a photopolymerizable composition having high sensitivity and less coloring can be provided by the use of a specific cation generating agent. The present invention has been accomplished based on such findings.

According to the present invention, there are provided the following means:
1) A photopolymerizable composition including a cationically polymerizable compound and a cation generating agent represented by formula (1):

   Formula (1) D-L-A

   wherein D represents a light absorption part that shows an absorption having an absorption coefficient of 1000 or more in a wavelength range of 300 nm or longer; A represents an active part which interacts with the light absorption part D to generate a cation when the light absorption part D is excited by light; and L represents a linking group which links the light absorption part D with the active part A.
2) The photopolymerizable composition according to Item 1), wherein the light absorption part D of formula (1) contains a cyanine dye residue, a hemicyanine dye residue, a merocyanine dye residue, a coumarin dye residue, or a hemioxonol dye residue.
3) The photopolymerizable composition according to Item 1) or 2), wherein the cation generating agent represented by formula (1) is a compound represented by formula (2): 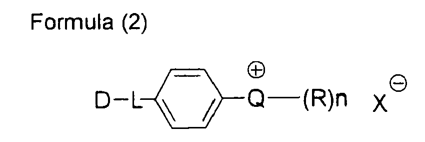 wherein D represents a light absorption part that shows an absorption having an absorption coefficient of 1000 or more in a wavelength range of 300 nm or longer; L represents a linking group which links the light absorption part D with Q, and Q represents an iodine atom or a sulfur atom, R represents an alkyl group or an aryl group which may further have a substituent, n represents 1 or 2, and X⁻ represents a counter anion.
4) The photopolymerizable composition according to any one of Items 1) to 3),
   wherein the cationically polymerizable compound is a compound having two or more alicyclic epoxy groups in one molecule.
5) The photopolymerizable composition according to any one of Items 1) to 4),
wherein a content of the cationically polymerizable compound is 40 to 75 mass% based on a total amount of the photopolymerizable composition.

The present invention will be explained in detail below.

### (Cation generating agent)

The cation generating agent for use in the present invention is a compound represented by formula (1):

Formula (1) D-L-A

wherein D represents a light absorption part that shows an absorption having an absorption coefficient of 1000 or more in a wavelength range of 300 nm or longer; A represents an active part which interacts with the light absorption part D to generate a cation when the light absorption part D is excited by light; and L represents a linking group which links the light absorption part D with the active part A.

The outlines of the mechanisms in which the cation generating agent represented by formula (1) for use in the present invention generates a cation are as follows.

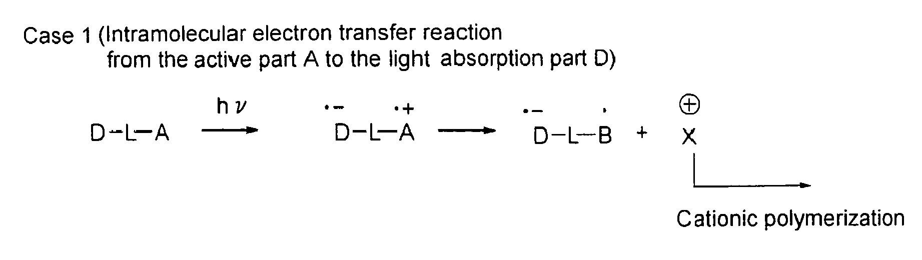

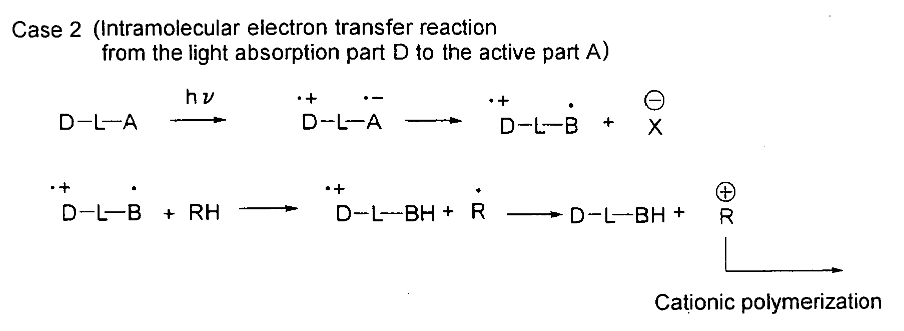

In the case 1, when the cation generating agent (D-L-A) represented by formula (1) is irradiated with light, the light absorption part D is excited by light, which causes intramolecular electron transfer from the active part A to the light absorption part D, resulting in that the active part A becomes a cationic radical. When the active part A becomes a cationic radical, the active part A decomposes into a cation B and a radical X at a fixed probability. Here, in the formula of the case 1, B and X each represents a residue generated as a result of decomposition of A, and more specifically, B represents a radical generated by decomposition of A and X represents a cation generated by decomposition of A. According to such a mechanism, a cation X is generated from the active part A.

In the case 2, when the cation generating agent (D-L-A) represented by formula (1) is irradiated with light, the light absorption part D is excited by light, which causes intramolecular electron transfer from the light absorption part D to the active part A, resulting in that the active part A becomes an anion radical and decomposes into a radical B and an anion X. Here, in the formula of the case 2, B and X each represents a residue generated as a result of decomposition of A, and more specifically, B represents a radical generated by decomposition of A and X represents an anion generated by decomposition of A. Subsequently, the radical B generated by decomposition of the active part A abstracts a hydrogen atom from a compound RH, which is present in a medium, and the cation R is generated by oxidation reaction of the compound.

Whether the reaction proceeds according to the case 1 scheme or the case 2 scheme depends on oxidation-reduction potential, reactivity, etc., between the active part A and the light absorption part D of the cation generating agent represented by formula (1).

In the cation generating agent (photopolymerization initiator) represented by formula (1) for use in the present invention, photoelectron transfer efficiently occurs because the active part A and the light absorption part D are closely positioned by a covalent bond. Therefore, the cation generating agent for use in the present invention shows higher cation generating efficiency as compared with a cation generating agent in which the active part A and the light absorption part D are not linked (i.e. the case of a combined use of a compound having the active part A and a compound having the light absorption part D). Moreover, such an effect is not reduced even when the added amount becomes low, and the cation generating agent exhibits a high cation generation efficiency in a low concentration range. Therefore, it is possible to produce a cured product which is less colored by a dye part. Moreover, visible light curing is possible without impairing an original color, and a thick film or a thin film can be efficiently cured.

In formula (1), D represents a light absorption part which has absorption of an absorption coefficient of 1000 or more in a wavelength range of 300 nm or longer. The light absorption part D refers to a residue obtained by excluding a linking part with a linking group L from a compound having the light absorption part D. It is preferable that an absorption wavelength range be in the range of 400 to 900 nm.

As the compound having the light absorption part D, various dyes, condensed polycyclic aromatic compounds, condensed polycyclic heteroaromatic compounds, aromatic ketone compounds, etc., can be mentioned.

A cationic dye and a nonionic dye are preferable as the above-mentioned dye. The cationic dye contains a quaternary ammonium in a color-forming conjugate system of the dye molecule. Specific examples of the cationic dye include, but not limited to, a cyanine dye, a hemicyanine dye, triaryl methane dye, a styryl dye, a diaryl methane dye, and a fluorane dye. In addition, the nonionic dye is a dye which does not contain a counter anion and does not form a salt with anion. Specific examples of the nonionic dye include, but not limited to, a merocyanine dye, an oxonol dye, a cumarin dye, an azo dye, an azomethine dye, a styryl-base dye, a stylbene dye, a hemioxonol dye, a dye having a vinyl ketone bond, a quinone dye, and a phthalocyanine dye. Of those dyes, a cyanine dye, a hemicyanine dye, a merocyanine dye, a cumarin dye, and a hemioxonol dye are preferable in terms of high sensitivity.

As the condensed polycyclic aromatic compound, anthracene, phenanethrene, pyrene, and derivatives thereof can be mentioned, and as the condensed polycyclic heteroaromatic compound, acridine, carbazole, phenothiazine, and derivatives thereof can be mentioned. In addition, as the aromatic ketone compound, ketone compounds such as benzophenone, thioxanthone, anthraquinone, naphthoquinone, acridone, fluorenone, and derivatives thereof can be mentioned. Further, the cationic dye residue, nonionic dye residue, condensed polycyclic aromatic compound residue, condensed polycyclic heteroaromatic compound residue, and aromatic ketone compound residue may be substituted by a substituent(s).

Examples of the substituent include a carboxyl group, a sulfo group, a cyano group, a halogen atom (e.g., a fluorine atom, a chlorine atom, and a bromine atom), a hydroxyl group, an alkoxycarbonyl group having 2 to 30 carbon atoms (e.g., a methoxycarbonyl group, an ethoxy carbonyl group, and a benzyloxycarbonyl group), an alkylsulfonyl aminocarbonyl group having 2 to 30 carbon atoms, an arylsulfonyl aminocarbonyl group, an alkylsulfonyl group, an aryl sulfonyl group, an acylaminosulfonyl group having 2 to 30 carbon atoms, an alkoxy group having 1 to 30 carbon atoms (e.g., a methoxy group, an ethoxy group, a benzyloxy group, a phenoxyethoxy group, and a phenethyloxy group), an alkylthio group having 1 to 30 carbon atoms (e.g., a methylthio group, an ethylthio group, and a dodecylthio group), an aryloxy group having 6 to 30 carbon atoms (e.g., a phenoxy group, a p-tolyloxy group, a 1-naphthoxy group, and a 2-naphthoxy group), a nitro group, an alkyl group having 1 to 30 carbon atoms, an alkoxy carbonyloxy group, an aryloxycarbonyloxy group, an acyloxy group having 2 to 30 carbon atoms (e.g., an acetyloxy group and a propionyloxy group), an acyl group having 2 to 30 carbon atoms (e.g., an acetyl group, a propionyl group, and a benzoyl group), a carbamoyl group (e.g., a carbamoyl group, an N,N-dimethylcarbamoyl group, a morpholino carbonyl group, and a piperidino carbonyl group), a sulfamoyl group (e.g., a sulfamoyl group, an N,N-dimethyl sulfamoyl group, a morpholino sulfonyl group, and a piperidino sulfonyl group), an aryl group having 6 to 30 carbon atoms (e.g., a phenyl group, a 4-chlorophenyl group, a 4-methylphenyl group, and an α-naphthyl group), a substituted amino group (e.g., an amino group, an alkylamino group, a dialkylamino group, an arylamino group, a diaryl amino group, and an acylamino group), a substituted ureido group, a substituted phosphono group, a heterocyclic group, etc. Here, the carboxyl group, the sulfo group, the hydroxy group, and the phosphono group may be in a form of salt.

In formula (1) shown above, A represents the active part which interacts with the light absorption part D excited by light, to thereby generate a cation. The active part A refers to a residue obtained by excluding a linking part with a linking group L from a compound having the active part A.

Typical examples of the compound having the active part A include:
bisimidazole compounds; onium compounds such as a diphenyliodonium, a hydroxyalkyl ketone, and a triphenylsulfonium salt; amines such as a trichloromethyl substituted-S-triazine compound, N-phenylglycine, triethanol amine, and hydrazine; phosphorous compounds such as triphenyl phosphine and tri-n-butylphosphine; sulfinic acids such as p-toluenesulphinic acid sodium salt; sulfonic acid esters such as p-toluene sulfonic acid methyl ester; heterocyclic compounds such as oxazole, oxadiazole, and imidazole; enolate compounds such as dimedone; tin compounds such as tributylbenzyl tin; pyridinium salts such as 1-methoxy-4-carbomethoxy pyridinium tetrafluoro borate (these compounds are described in "Research Disclosure" Vol. 200, Dec. 1980, Item 20036); allylthioureas or oxime esters; and borate compounds such as triphenyl-n-butyl borate.

Of those, preferred as the active part A are residues derived from compounds having a trichloromethyl group and residues derived from compound having an onium group, such as sulfonium and iodonium.

In formula (1) shown above, L represents the linking group which links the light absorption part D with the active part A, and L represents a divalent linking group or a single bond. Preferable as the divalent linking group represented by L are groups containing an atom or an atomic group having at least one of a carbon atom, a nitrogen atom, a sulfur atom, and an oxygen atom. Preferred examples are divalent linking groups having 1 or more and 20 or less carbon atoms, formed by combining one or more of groups selected from alkylene groups (e.g., methylene, ethylene, propylene, butylene, and pentylene), arylene groups (e.g., phenylene and naphthylene), alkenylene groups (e.g., ethenylene and propenylene), alkynylene groups (e.g., ethynylene and propynylene), amido groups, ester groups, sulfonamido groups, sulfonate groups, ureido groups, sulfonyl groups, sulfinyl groups, thioether groups, ether groups, carbonyl groups, -N(Ra)-groups (wherein Ra represents a hydrogen atom, a substituted or unsubstituted alkyl group, or a substituted or unsubstituted aryl group), and heterocyclic divalent groups (e.g., a 6-chloro-1,3,5-triazine-2,4-diyl group, a pyrimidine-2,4-diyl group, and a quinoxaline-2,3-diyl group). These divalent linking groups may be further substituted, and, as a substituent, the above-mentioned substituents for aromatic ketone compound residues are similarly mentioned.

More preferred examples of the divalent linking group or single bond represented by L include a single bond and a divalent linking group having 1 or more to 20 or less carbon atoms, formed by combining one or more of groups selected from an alkylene group having 1 or more to 20 or less carbon atoms (e.g., methylene, ethylene, propylene, and butylene), an arylene group having 6 or more to 20 or less carbon atoms (e.g., phenylene, and naphthylene), an alkenylene group having 2 or more to 20 or less carbon atoms (e.g., ethenylene, and propenylene).

Among the compounds represented by formula (1), onium salt compounds of sulfonium or iodonium represented by formula (2) are especially preferable.

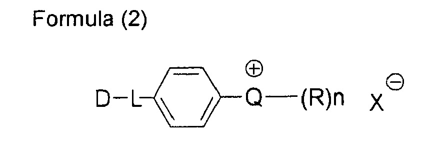

In formula (2), D and L have the same meanings as D and L in formula (1), and the preferable ranges are also the same; Q represents an iodine atom or a sulfur atom; R represents an alkyl group or an aryl group each of which may further have a substituent; n represents 1 or 2; X⁻ represents a counter anion, and is preferably BF₄⁻, PF₆⁻, AsF₆⁻, or SbF₆⁻.

R is preferably an alkyl group having 1 to 20 carbon atoms, an alkyl group substituted by an aryl group having 6 to 14 carbon atoms, an aryl group having 6 to 14 carbon atoms, or an aryl group substituted by an alkyl group having 1 to 20 carbon atoms. Preferred examples of R include methyl, ethyl, butyl, benzyl, phenyl, and naphthyl.

Specific examples of the compounds represented by formula (1) or (2) are shown below, but the present invention is not limited to the following compounds.

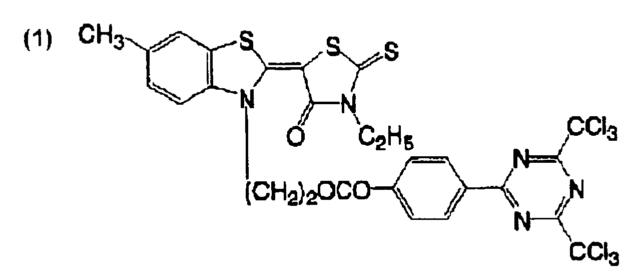

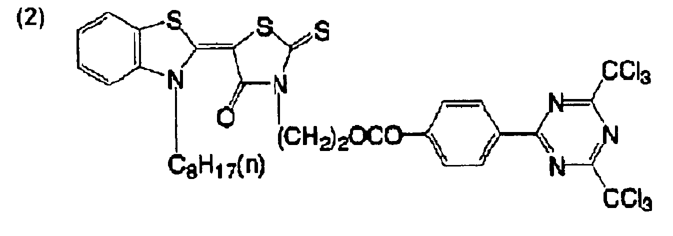

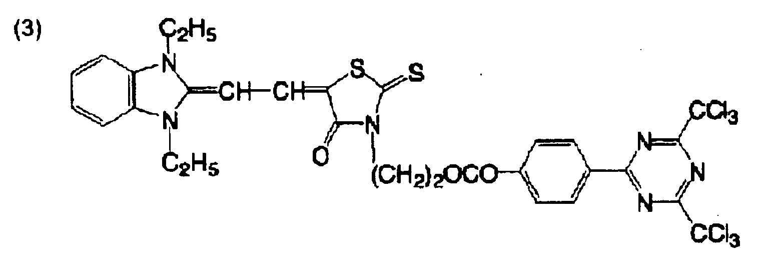

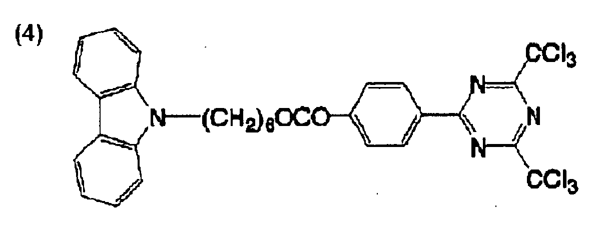

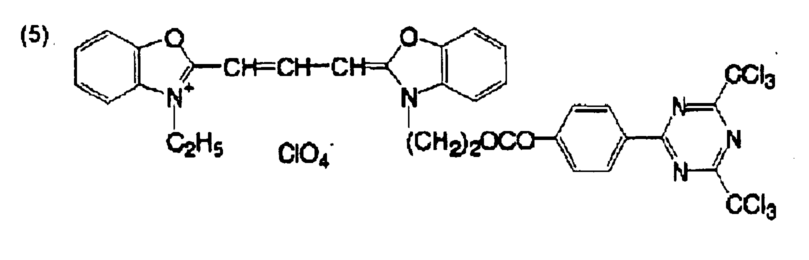

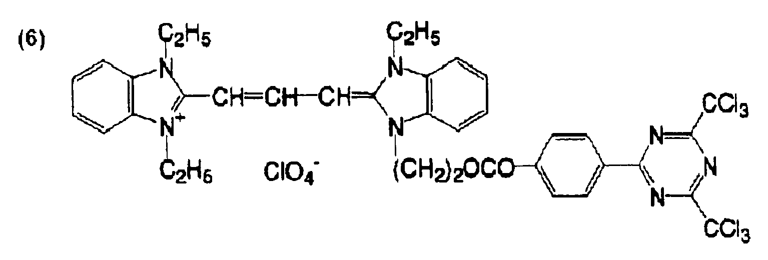

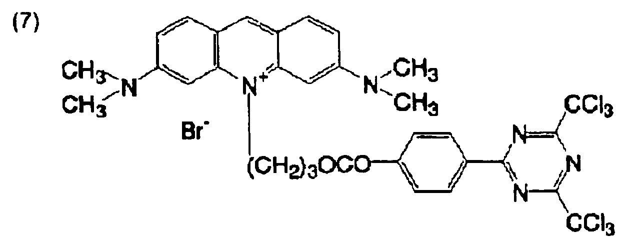

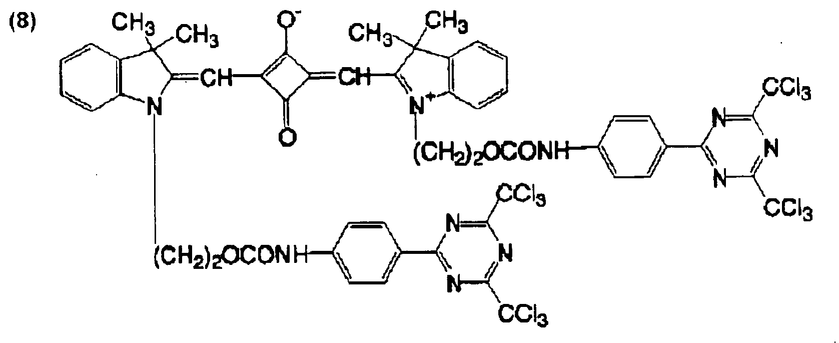

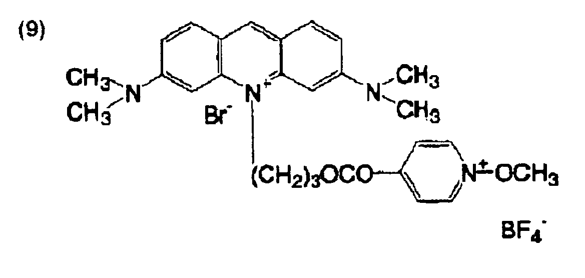

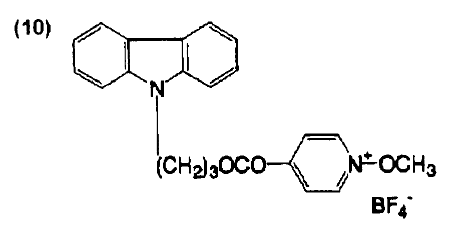

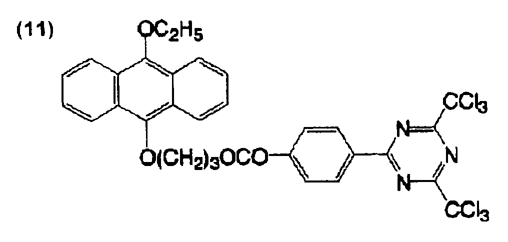

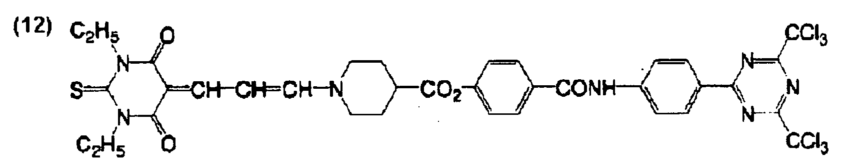

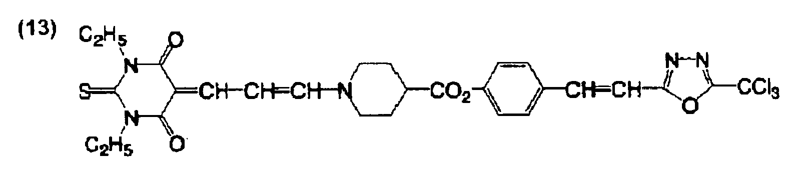

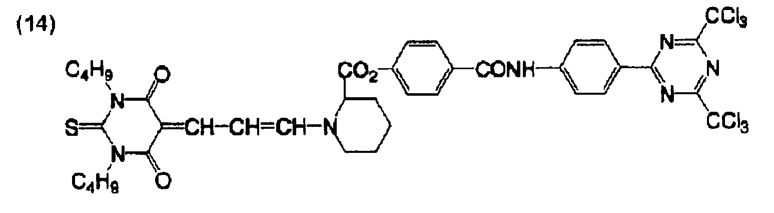

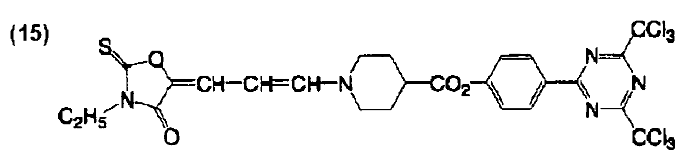

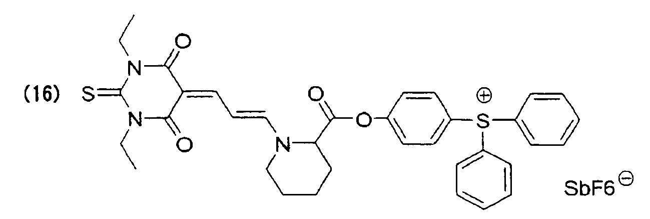

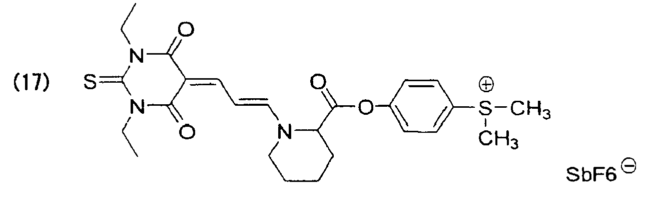

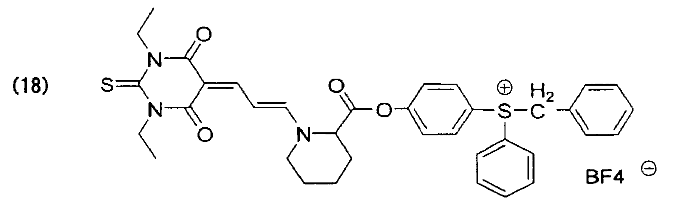

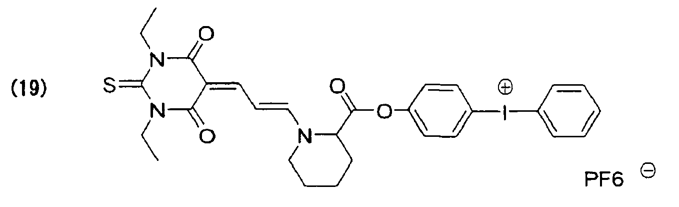

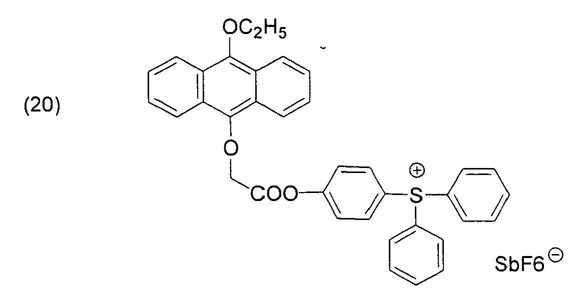

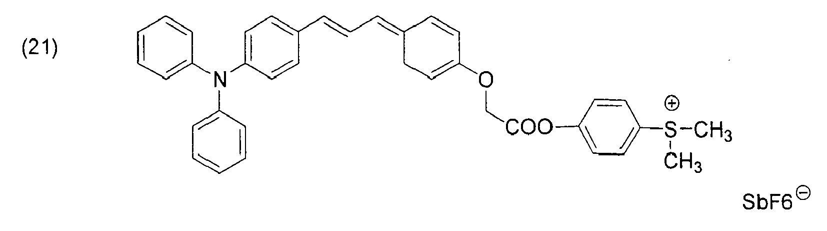

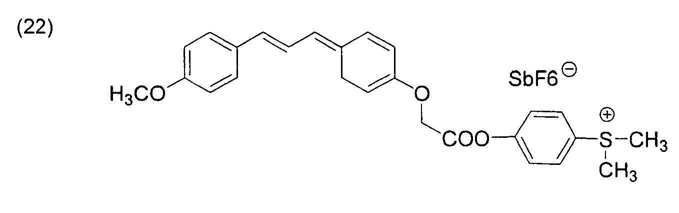

The compounds represented by formula (1) or (2) can be obtained by reacting and condensing the compound having the active part A with the compound having the light absorption part D, as shown in the following synthesis scheme. As the condensation reaction, a general condensation reaction can be employed, and the reaction can be usually conducted by heating or using a catalyst or a condensing agent.

D-L₁ + L₂-A → D-L-A

Here, D-L₁ represents a compound (dye or the like) having the light absorption part D, and L₂-A represents a compound (onium salt or the like) having the active part A. L₁ and L₂ each represents a reactive group, and the groups are condensed to form a linking group L. Examples of L₁ and L₂ include a carboxyl group, a hydroxy group, an isocyanate group, an amino group, etc.

The content of the cation generating agent represented by formula (1) or (2) in the photopolymerizable composition of the present invention is preferably 0.001 to 15 mass%, more preferably 0.01 to 5 mass%, and still more preferably 0.1 to 3 mass%, based on the total amount (100 mass%) of the photopolymerizable composition. The cation generating agent for use in the present invention shows a high cation generating efficiency even when it is used in a small amount. Therefore, the photopolymerizable composition of the present invention containing the cation generating agent has high sensitivity and causes less coloring, and moreover, gives transparent optical three-dimensional articles, such as optical components, in a relatively short time by photopolymerization.

### (Cationically polymerizable compound)

The cationically polymerizable compound for use in the photopolymerizable composition of the present invention is a compound which causes a polymerization reaction or a crosslinking reaction, by irradiating light in the presence of a cationically photopolymerization initiator.

There is no limitation on the cationically polymerizable compound, and compounds having two or more alicyclic epoxy groups in one molecule are preferable. By incorporating the compound having two or more alicyclic epoxy groups in one molecule in a proportion of 40 mass% or more based on the total amount (100 mass%) of the cationically polymerizable compound, particularly favorable curing rate, mechanical strength, and heat resistance can be achieved.

Specific examples of the cationically polymerizable compound include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ethers, hydrogenated bisphenol F diglycidyl ethers, hydrogenated bisphenol S diglycidyl ethers, 3,4-epoxycyclohexylmethyl-3',4'-epoxycyclohexylcarboxylate, 2-(3,4-epoxycyclohexyl-5,5-spiro-3,4-epoxy)cyclohexane-meta-dioxane, bis(3,4-epoxycyclohexylmethyl)adipate, bis(3,4-epoxy-6-methylcyclohexylmethyl)adipate, 3,4-epoxy-6-methylcyclohexyl-3',4'-epoxy-6'-methylcyclohexane carboxylate, ε-caprolactone-modified 3,4-epoxycyclohexylmethyl-3',4'-epoxycyclohexane carboxylates, trimethylcaprolactone-modified 3,4-epoxycyclohexylmethyl-3',4'-epoxycyclohexane carboxylates, β-methyl-δ-valerolactone-modified 3,4-epoxycyclohexcylmethyl-3',4'-epoxycyclohexane carboxylates, methylenebis(3,4-epoxycyclohexane), di(3,4-epoxycyclohexylmethyl)ether of ethylene glycol, ethylenebis(3,4-epoxycyclohexane carboxylate), dioctyl epoxycyclohexahydro phthalate, di-2-ethylhexyl epoxycyclohexahydro phthalate, 1,4-butanediol diglycidyl ether, 1,6-hexanediol diglycidyl ether, neopentylglycol diglycidyl ether, trimethylol propane triglycidyl ether, polyethylene glycol diglycidyl ethers, glycerine triglycidyl ether, polypropylene glycol diglycidyl ethers, diglycidyl esters of aliphatic long-chain dibasic acids; monoglycidyl ethers of aliphatic higher alcohols; polyglycidyl ethers of polyether polyols obtained by adding one or two or more kinds of alkylene oxides to aliphatic polyalcohols such as ethylene glycol, propylene glycol, and glycerine; monoglycidyl ethers of polyether alcohols, which are obtained by adding phenol, cresol, butyl phenol, or alkylene oxides; glycidyl esters of higher fatty acid; epoxidized soybean oils, epoxy butyl stearate, octyl epoxy stearate, epoxidized flaxseed oils, epoxidized polybutadienes, oxetane compounds such as 1,4-bis[(3-ethyl-3-oxetanylmethoxy)methyl]benzene.

The above-mentioned cationically polymerizable compounds can be used singly or in combination of two or more thereof.

Of those cationically polymerizable compounds, preferred are 3,4-epoxycyclohexylmethyl-3',4'-epoxycyclohexyl carboxylate, bis(3,4-epoxycyclohexylmethyl)adipate, ε-caprolactone-modified 3,4-epoxycyclohexylmethyl-3',4'-epoxycyclohexyl carboxylate, trimethylcaprolactone-modified 3,4-epoxycyclohexylmethyl-3',4'-epoxycyclohexane carboxylate, β-methyl-δ-valerolactone-modified 3,4-epoxycyclohexylmethyl-3',4'-epoxycyclohexane carboxylate, bisphenol A diglycidyl ether, bisphenol F diglycidyl ether, a hydrogenated bisphenol A diglycidyl ether, a hydrogenated bisphenol F diglycidyl ether, 1,4-butanediol diglycidyl ether, 1,6-hexanediol diglycidyl ether, trimethylol propane triglycidyl ether, glycerine triglycidyl ether, polyethylene glycol diglycidyl ether, polypropylene glycol diglycidyl ether, and 1,4-bis[(3-ethyl-3-oxetanylmethoxy)methyl]benzene.

From the viewpoint of achieving a favorable curing rate, mechanical strength, and heat resistance as mentioned above, compounds having two or more alicyclic epoxy groups in one molecule, such as 3,4-epoxycyclohexylmethyl-3',4'-epoxycyclohexyl carboxylate and bis(3,4-epoxycyclohexylmethyl)adipate, are still more preferable.

Examples of the cationically polymerizable compound commercially available include UVR-6100, UVR-6105, UV-6110, UVR-6128, UVR-6200, and UVR-6216 (all of which are manufactured by Union Carbide Corporation), CELLOXIDE 2021, CELLOXIDE 2021P, CELLOXIDE 2081, CELLOXIDE 2083, CELLOXIDE 2085, EPOLEAD GT-300, EPOLEAD GT-301, EPOLEAD GT-302, EPOLEAD GT-400, EPOLEAD 401, and EPOLEAD 403 (manufactured by Daicel Chemical Industries, Ltd.), KRM-2100, KRM-2110, KRM-2199, KRM-2400, KRM-2410, KRM-2408, KRM-2490, KRM-2200, KRM-2720, and KRM-2750 (manufactured by ADEKA CORPORATION), Rapi-cure DVE-3, CHVE, and PEPC (manufactured by International Specialty Products Inc.), EPIKOTE 828, EPIKOTE 812, EPIKOTE 1031, EPIKOTE 872, and EPIKOTE CT508 (manufactured by JAPAN EPOXY RESINS CO., Ltd.), XDO (manufactured by TOAGOSEI CO., LTD.), and VECOMER 2010, 2020, 4010, and 4020 (manufactured by AlliedSignal) (all of which are trade names).

The content of the cationically polymerizable compound in the photopolymerizable composition of the present invention is preferably 15 to 98 mass%, more preferably, 30 to 80 mass%, and particularly preferably 40 to 75 mass%, based on the total amount (100 mass%) of the photopolymerizable composition. When the content of the cationically polymerizable compound exceeds 85 mass%, the deformation, such as curling, of a three-dimensional article tends to increase. In contrast, when the content is less than 15 mass%, the mechanical properties and thermal properties of a three-dimensional article tend to decrease.

### (Other components)

Moreover, the composition of the present invention may contain various kinds of additives as arbitrary components insofar as the objects and effects of the present invention are not adversely affected. Mentioned as such additives are: polymers or oligomers such as an epoxy resin, a polyamide, a polyamidoimide, a polyurethane, a polybutadiene, a polychloroprene, a polyether, a polyester, a styrene-butadiene block copolymer, a petroleum resin, a xylene resin, a ketone resin, a cellulosic resin, a fluorine-containing oligomer, a silicone-series oligomer, and a polysulfide-series oligomer; polymerization inhibitors such as phenothiazine and 2,6-di-tert-butyl-4-methylphenol; polymerization initiation assistants; leveling agents; wettability improving agents; surfactants; plasticizers; UV absorbers; silane linking agents; inorganic fillers; elastomer particles; pigments; dyes; etc.

### (Production method of photopolymerizable composition of the present invention)

The photopolymerizable composition of the present invention can be produced by placing optimum amounts of a cation generating agent represented by formula (1) or (2) shown above, a cationically polymerizable compound, other additives, etc., in a stirring container, and stirring the mixture usually at a temperature of 30 to 70°C, and preferably at a temperature of 50 to 60°C usually for 1 to 6 hours, and preferably for 1 to 2 hours.

The photopolymerizable composition of the present invention thus obtained is suitably used as a radiation-curable liquid resin composition in the method of forming optical three-dimensional articles. More specifically, a three-dimensional article having a desired shape can be produced by the optical three-dimensional forming method which involves selectively irradiating the photopolymerizable composition of the present invention with light such as visible light, ultraviolet light, and infrared light, for supplying energy required for curing.

By the use of the photopolymerizable composition of the present invention, transparent optical three-dimensional articles with less coloring can be produced in a relatively short time.

There is no limitation on methods for selectively irradiating the composition of the present invention, and various methods can be used.

For example, the following methods can be employed: (a) a method involving irradiating the composition while scanning a laser beam or a converged light or the like which is obtained by using a lens, a mirror, etc.; (b) a method involving irradiating the composition with a non-converged light through a mask having a light transmitting portion of a predetermined pattern; and (c) a method involving using a waveguide member formed by bundling many optical fibers, and irradiating the composition through the optical fiber(s) corresponding to a certain pattern formed in the waveguide member.

In the method (b) of using a mask, also usable as a mask is a material that electrooptically forms a mask image composed of a light transmitting area and a light non-transmitting area, according to a certain pattern, by the same principle as in a liquid crystal display device.

When a target three-dimensional article has a fine part or requires a high dimensional accuracy, it is preferable to adopt a method involving scanning a laser beam with a small spot diameter as a method for selectively irradiating the liquid resin composition.

When the liquid resin composition is contained in a container, a light irradiation surface (e.g., scanning plane of a converged light) may be any of the liquid surface of the liquid resin composition and a contact surface with the container wall of a light transmitting container. When the liquid surface of the liquid resin composition or the contact surface with the container wall is used as a light irradiation surface, light can be emitted directly from the outside of the container or through the container wall.

Generally, in the above-mentioned method of forming optical three-dimensional articles, a particular part of a liquid resin composition is cured, and then a light irradiation position (irradiation surface) is continuously or gradually shifted from the cured portion to an uncured portion, thereby laminating the cured portions to obtain a desired three-dimensional shape. Here, the irradiation position can be shifted by various methods, and examples of the methods include the following: a method of shifting any of a light source, a container of the resin composition, and a cured portion of the resin composition; and a method involving additionally supplying a resin composition to the container.

A typical example of the above-mentioned optical three-dimensional forming method is as follows.

First, in a container equipped with a support stage movable up and down, a liquid resin composition is supplied on the support stage by lowering (submerging) the support stage to a level slightly lower than the liquid surface of the liquid resin composition, thereby forming a thin layer (1) thereof.

Subsequently, the thin layer (1) is subjected to irradiation selectively with light, thereby forming a cured resin layer (1) in a solid state.

Subsequently, the liquid resin composition is supplied on the cured resin layer (1), thereby forming a thin layer (2); then the thin layer (2) is subjected to irradiation selectively with light, thereby forming a new cured rein layer (2) which is continuously and integrally laminated on the cured resin layer (1).

Then, the above step is repeated by prescribed times while changing or not changing a light-irradiation pattern, thereby shaping a three-dimensional article in which a plurality of cured resin layers (1, 2, ..., n) are integrally laminated.

The three-dimensional article thus obtained is taken out from the container, an unreacted resin composition remaining on the surface is removed, and then the resultant is washed as required. Here, mentioned as examples of a washing agent are alcoholic organic solvents typified by alcohols such as isopropyl alcohol and ethyl alcohol; ketone organic solvents typified by acetone, ethyl acetate, and methyl ethyl ketone; aliphatic organic solvents typified by terpenes; low viscosity thermosetting resins; and radiation-curable resins.

When the three-dimensional article is washed using a washing agent, post curing may be performed by heat exposure or light irradiation if required.

By the post curing, an unreacted resin composition remaining on the surface of and inside the three-dimensional article can be cured, the surface of the article can be prevented from becoming sticky, and the initial strength of the article can be improved.

The photopolymerizable composition of the present invention has high sensitivity and causes less coloring. Moreover, the photopolymerizable composition of the present invention obtains transparent optical three-dimensional articles such as optical components in a relatively short time by photopolymerization.

The present invention will be described in more detail based on the following examples, but the invention is not intended to be limited thereto.

### EXAMPLES

### Example 1

### (Preparation of Cation Generating Agent Compound)

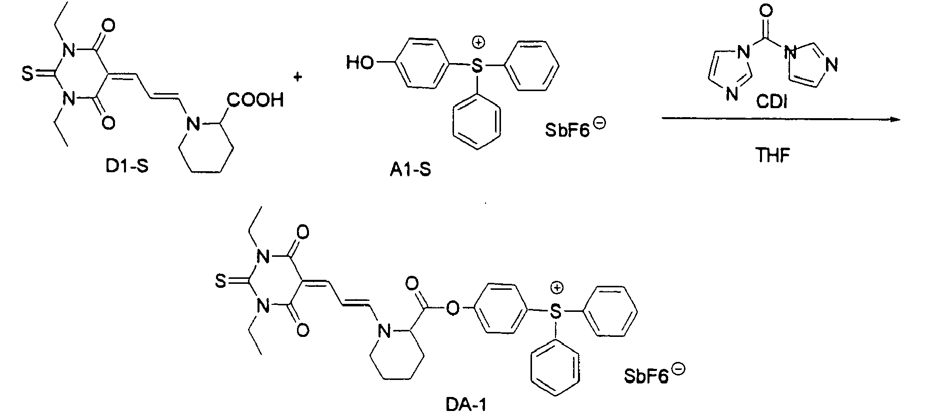

4.0 g of compound D1-S, 5.1g of compound A1-S, and 100 ml of tetrahydrofuran (THF) were put into a three necked flask, and the mixture was ice cooled under a nitrogen stream. 1.8 g of carbonyldiimidazole (CDI) was added over 15 minutes while maintaining the internal temperature to 5 to 10°C. The mixture was stirred for 1 hour as it was, and then stirring was continued at room temperature for 2 hours. Nitrogen stream was stopped, and the precipitated crystals were filtrated under reduced pressure, followed by washing with 100 ml of water, thereby obtaining 5.1 g of the intended cation generating agent compound DA-1. The yield was 60%. With respect to the cation generating agent compound DA-1, the absorption coefficient and the maximum absorption wavelength in tetrahydrofuran were measured using a UV meter (manufactured by Shimadzu Corp., trade name: UV-3600). The absorption coefficient was 118,000 and the maximum absorption wavelength was 432 nm.

### (Preparation of Photopolymerizable Composition)

With respect to 100 parts by mass of CELLOXIDE 2021P (trade name, manufactured by Daicel Chemical Industries, Ltd., alicyclic-epoxy-resin 3,4-epoxycyclohexylmethyl-3,4-epoxy cyclohexane carboxylate), 1.75 parts by mass of the cation generating agent DA-1 was added, thereby preparing a photosensitive solution.

### (Production of Optical Three-Dimensional Article)

The photosensitive solution was poured into a glass container (10 mm in diameter x 40 mm in height) to a height of 40 mm. Subsequently, using a xenon lamp of 300 W as a light source, the glass container was irradiated with a visible light, which had passed through a colored glass filter (Y-44), for about 15 minutes from a height of 11.5 cm (irradiation distance), thereby producing a three-dimensional article (column). As a result, the resin in the glass container was thoroughly cured. The thickness (height) of the resin was 40 mm (maximum measured value) which was a limitation of glass container.

### Comparative example 1

Following the same procedure as in Example 1 except for the point that 0.80 part by mass of the following compound D1 and 1.13 parts by mass of the following compound A1 were used in place of 1.75 parts by mass of the cation generating agent DA-1, a photopolymerizable composition was prepared.

Using the thus-obtained photopolymerizable composition, production of an optical three-dimensional article was conducted in the same manner as in Example 1. The resin in the glass container was not cured. Thus, a three-dimensional article was not obtained.

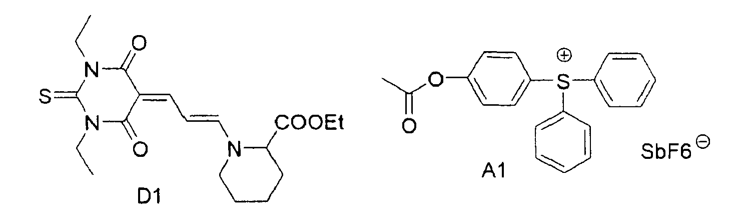

### Comparison between Example 1 and Comparative Example 1

In Comparative Example 1 in which the compound having the active part A and the compound having the light absorption part D were used together, the resin was not cured and a three-dimensional article was not obtained. In contrast, in Example 1 using the cation generating agent in which the active part A and the light absorption part D are closely positioned by a covalent bond, the resin was thoroughly cured, and thus a three-dimensional article (column) was successfully obtained. The thickness of the resin was 40 mm (maximum measured value) which was a limitation of glass container.

This shows that, because the cation generating agent for use in the present invention had the active part A and the light absorption part D closely positioned by a covalent bond, photoelectron transfer efficiently occurred; and therefore the cation generating agent for use in the present invention showed a higher cation generating efficiency compared with that of the cation generating agent in which the active part A and the light absorption part D were not connected. Moreover, the cation generating agent for use in the present invention showed a high cation generating efficiency even when it was used in a small amount. Therefore, the photopolymerizable composition of the present invention containing such a cation generating agent has high sensitivity and causes less coloring, and moreover, gives transparent optical three-dimensional articles such as optical components in a relatively short time by effecting photopolymerization.

### Example 2

A liquid resin composition (the composition prepared in Example 1) was poured into a glass container (10 mm in diameter x 40 mm in height) to a height of 40 mm. Using a solid creator SCS-300P (trade name, manufactured by Sony Manufacturing Systems Corporation) and under scanning rate conditions where the laser output on the irradiation surface (liquid surface) was 100 mW and a curing depth in each composition was 0.2 mm, a step of selectively irradiating the liquid resin composition (the composition prepared in Example 1) with a 405 nm laser beam to form a cured resin layer (0.1 mm in thickness) was repeated, thereby producing a three-dimensional article (column). The obtained three-dimensional article was observed for the color, but hardly any color was observed.

### Comparative example 2

A three-dimensional article was produced following the same procedure of Example 2 except that the composition of Comparative Example 1 was used. Curing did not occur, and thus a three-dimensional article was not obtained.

Having described our invention as related to the present embodiments, it is our intention that the invention not be limited by any of the details of the description, unless otherwise specified, but rather be construed broadly within its spirit and scope as set out in the accompanying claims.

## Claims

1. A photopolymerizable composition comprising a cationically polymerizable compound and a cation generating agent represented by formula (1):
Formula (1) D-L-A
wherein D represents a light absorption part that shows an absorption having an absorption coefficient of 1000 or more in a wavelength range of 300 nm or longer; A represents an active part which interacts with the light absorption part D to generate a cation when the light absorption part D is excited by light; and L represents a linking group which links the light absorption part D with the active part A.

2. The photopolymerizable composition according to Claim 1, wherein the light absorption part D of formula (1) comprises a cyanine dye residue, a hemicyanine dye residue, a merocyanine dye residue, a coumarin dye residue, or a hemioxonol dye residue.

3. The photopolymerizable composition according to Claim 1 or 2, wherein the cation generating agent represented by formula (1) is a compound represented by formula (2): 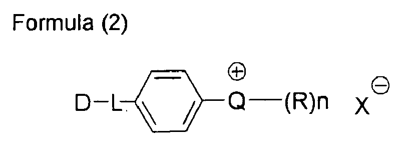 wherein D represents a light absorption part that shows an absorption having an absorption coefficient of 1000 or more in a wavelength range of 300 nm or longer; L represents a linking group which links the light absorption part D with Q; and Q represents an iodine atom or a sulfur atom, R represents an alkyl group or an aryl group each of which may further have a substituent, n represents 1 or 2, and X⁻ represents a counter anion.

4. The photopolymerizable composition according to any one of Claims 1 to 3, wherein the cationically polymerizable compound is a compound having two or more alicyclic epoxy groups in one molecule.

5. The photopolymerizable composition according to any one of Claims 1 to 4, wherein a content of the cationically polymerizable compound is 40 to 75 mass% based on a total amount of the photopolymerizable composition.

6. The photopolymerizable composition according to Claim 1, wherein the active part A is a residue derived from a compound having a trichloromethyl group or a residue derived from a compound having an onium group.

7. The photopolymerizable composition according to Claim 1 or 3, wherein L is a single bond or a divalent linking group having 1 or more to 20 or less carbon atoms and formed by combining one or more of groups selected from an alkylene group having 1 or more to 20 or less carbon atoms, an arylene group having 6 or more to 20 or less carbon atoms, and an alkenylene group having 2 or more to 20 or less carbon atoms.
